(19) Europäisches Patentamt
European Patent Office
Office européen des brevets

(11) **EP 2 509 377 A1**

(12) # EUROPEAN PATENT APPLICATION
published in accordance with Art. 153(4) EPC

(43) Date of publication:
**10.10.2012 Bulletin 2012/41**

(51) Int Cl.:
**H04W 72/04** (2009.01)    **H04W 16/28** (2009.01)

(21) Application number: **09851840.0**

(86) International application number:
**PCT/JP2009/070193**

(22) Date of filing: **01.12.2009**

(87) International publication number:
**WO 2011/067832 (09.06.2011 Gazette 2011/23)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(71) Applicant: **Fujitsu Limited**
**Kawasaki-shi, Kanagawa 211-8588 (JP)**

(72) Inventors:
• **HARADA, Yuya**
**Fukuoka-shi**
**Fukuoka 814-8588 (JP)**

• **KIMURA, Dai**
**Kawasaki-shi**
**Kanagawa 211-8588 (JP)**

(74) Representative: **Fenlon, Christine Lesley**
**Haseltine Lake LLP**
**Lincoln House, 5th Floor**
**300 High Holborn**
**GB-London WC1V 7JH (GB)**

(54) **BASE STATION APPARATUS AND COMMUNICATION METHOD**

(57)    A base station apparatus performs radio communications with multiple mobile stations using a multi-input multi-output (MIMO) technique. The base station apparatus includes a scheduler configured to assign a mobile station to a first stream over a first frequency band or a second stream over a second frequency band included in the first frequency band, in accordance with the level of interference of the mobile station with a neighbor cell.

FIG.6

**Description**

TECHNICAL FIELD

The present invention relates to a base station apparatus and a communication method in a radio communications network.

BACKGROUND ART

The increase of mobile stations in radio communications networks has demanded technologies that achieve high throughput in a wide area.

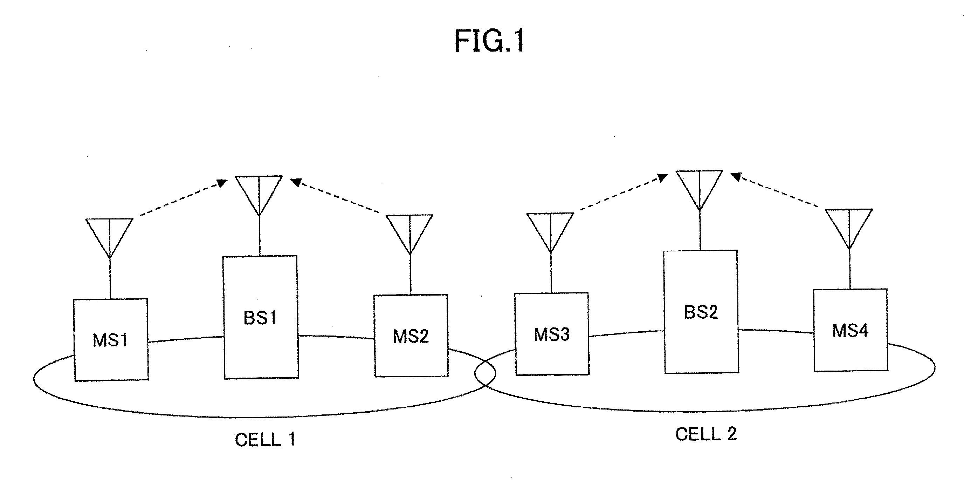

FIG. 1 is a diagram illustrating a configuration of a radio communications network 10. While a description is given below, taking an uplink as an example, the same is the case with a downlink. As illustrated in FIG. 1, radio base stations BS1 and BS2 are located in Cells 1 and 2, respectively, of the radio communications network 10. The BS1 and BS2 perform communications by receiving radio signals transmitted from mobile stations MS1 through MS4 in the cells.

There is a demand for improvement in the efficiency of use of frequency in order to increase throughput between radio base stations and mobile stations. For example, MIMO (Multi-Input Multi-Output) techniques are used in LTE (Long Term Evolution), which is a standard developed by 3GPP (3rd Generation Partnership Project).

According to MIMO, a transmitter transmits different information items from multiple transmission antennas in the same frequency band using spatial multiplexing, and a receiver receives transmitted signals with multiple reception antennas. The transmitted signals are received through multiple channels. The throughput may be improved by demodulating the received signals in consideration of the propagation path conditions of the respective channels.

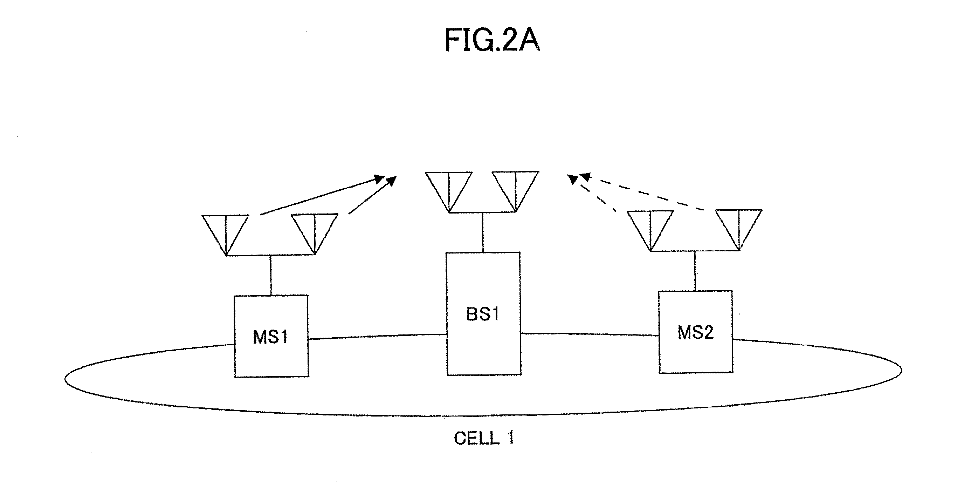

The MIMO technology includes single-user MIMO and multi-user MIMO. FIG. 2A is a diagram for illustrating single-user MIMO. As illustrated in FIG. 2A, each of the mobile stations MS1 and MS2 has multiple antennas, and transmits different data to the base station BS1 using the same frequency.

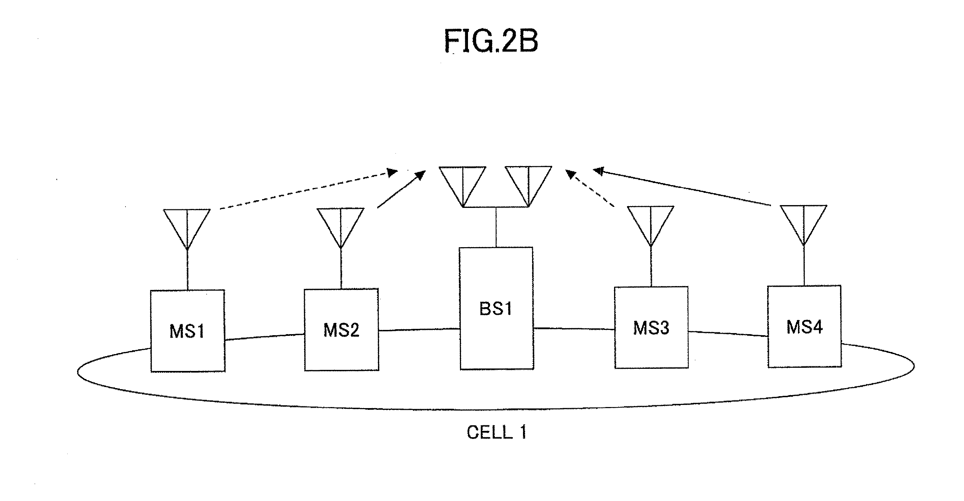

FIG. 2B is a diagram for illustrating multi-user MIMO. According to multi-user MIMO, the different mobile stations MS1 through MS4 transmit signals using the same frequency, and the base station BS1 receives the transmitted signals using multiple antennas as illustrated in FIG. 2B, so that MIMO communications may be performed. Multi-user MIMO is applicable and improvement in the efficiency of use of frequency is expected even if the number of antennas of a mobile terminal is one.

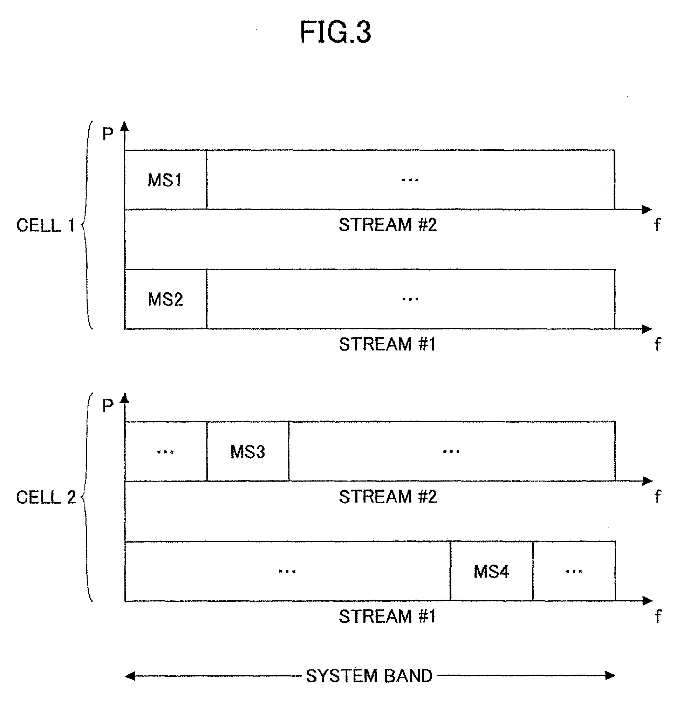

FIG. 3 is a diagram illustrating a frequency band f and transmission power P in multi-user MIMO. This example illustrates the case of 2 x 2 multi-user MIMO on the uplink. Different mobile stations (for example, MS1 and MS2) perform transmission in different streams (for example, Streams #1 and #2) using the same frequency band in the same cell (for example, Cell 1), so that the efficiency of use of frequency is improved and the throughput is increased.

On the other hand, there is a demand for techniques for improving the throughput of a mobile station near a cell boundary in consideration of interference with a neighbor cell. The FFR (Fractional Frequency Reuse) technology is effective for this. This technology assigns a frequency band different from that for a neighbor cell to a mobile station near the cell boundary, thereby preventing interference with the neighbor cell and improving the throughput of the mobile station near the cell boundary.

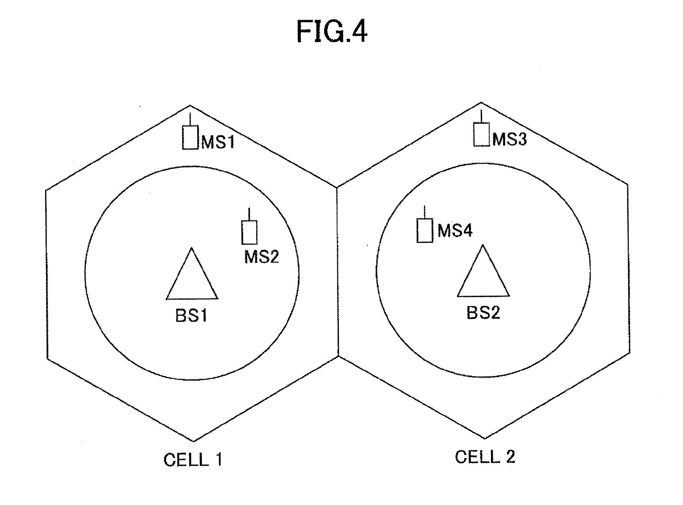

FIG. 4 is a diagram illustrating a spatial configuration of a radio communications network 20. The radio communications network 20 is divided into neighboring Cell 1 and Cell 2, in which the radio base stations BS1 and BS2 are located, respectively. Further, the mobile stations MS1, MS2... are in Cell 1, MS1 is in a cell boundary area, and the MS2 is in an area near BS1. Likewise, the mobile stations MS3, MS4... are in Cell 2, MS3 is in a cell boundary area, and MS4 is in an area near BS2.

In the case of directly applying FFR to this radio communications network 20, the interference between neighboring Cell 1 and Cell 2 may be reduced by assigning frequency bands different from each other to MS1 and MS3 in the respective boundary areas.

PRIOR ART DOCUMENT(S)

PATENT DOCUMENT(S)

[Patent Document 1] Japanese Laid-open Patent Publication No. 2007-214993
[Patent Document 2] Japanese Laid-open Patent Publication No. 2008-61250

DISCLOSURE OF THE INVENTION

PROBLEMS TO BE SOLVED BY THE INVENTION

There is a trade-off between the throughput of all mobile stations and the throughput of a mobile station positioned near a cell boundary.

If the multi-user MIMO technology is applied in a multi-cell environment, the efficiency of use of frequency increases, while the inter-cell interference due to use of the same frequency band by multiple mobile stations increases. As a result, the signal to interference plus noise ratio (SINR) decreases, thus causing a problem in that the throughput of the mobile stations is significantly reduced compared with an environment where a cell is isolated.

In order to solve this problem, it is possible to apply FFR, which is a technique that gives consideration to interference with a mobile station near a cell boundary. However, in the case of applying multi-user MIMO, since multiple mobile stations perform communications using the same frequency band in each sector, there is more interference, so that the interference suppression effect due to causing a frequency band assigned to a mobile station near a cell boundary to differ between neighboring cells is reduced. This also prevents the throughput improvement effect from being produced. Therefore, a satisfactory effect is not produced by combining FFR with multi-user MIMO.

The present invention has an object of providing a base station apparatus and a radio communication method in a radio communications network that make it possible to improve not only the throughput of the mobile stations of the entire cell but also the throughput of a mobile station near a cell boundary by giving consideration to interference with a neighbor cell in the case of applying multi-user MIMO.

MEANS FOR SOLVING THE PROBLEMS

A base station apparatus according to an embodiment, which performs radio communications with a plurality of mobile stations using a multiple-input multiple-output (MIMO) technique, includes a scheduler configured to assign a mobile station to a first stream over a first frequency band or a second stream over a second frequency band included in the first frequency band, in accordance with a level of interference of the mobile station with a neighbor cell.

A communication method according to another embodiment, which performs radio communications between a plurality of mobile stations and a base station apparatus using a multi-input multi-output (MIMO) technique, includes the steps of measuring a level of interference with a neighbor cell in the mobile stations; and assigning, in the radio base station, a mobile station to a first stream over a first frequency band or a second stream over a second frequency band included in the first frequency band, in accordance with the level of interference of the mobile station with the neighbor cell.

EFFECTS OF THE INVENTION

In the case of applying multi-user MIMO as well, it is possible to improve not only the throughput of the mobile stations of the entire cell but also the throughput of a mobile station near a cell boundary by giving consideration to interference with a neighbor cell.

BRIEF DESCRIPTION OF THE DRAWINGS

FIG. 1 is a diagram illustrating a configuration of a radio communications network;
FIG. 2A is a diagram for illustrating single-user MIMO;
FIG. 2B is a diagram for illustrating multi-user MIMO;
FIG. 3 is a diagram illustrating a frequency band and transmission power in multi-user MIMO;
FIG. 4 is a diagram illustrating a spatial configuration of a radio communications network;
FIG. 5 is a diagram illustrating a stream configuration in each cell according to an embodiment;
FIG. 6 is a diagram illustrating a configuration of a radio base station apparatus according to the embodiment;
FIG. 7 is a diagram illustrating a configuration of a mobile station apparatus according to the embodiment;
FIG. 8 is a flowchart illustrating a communication method according to the embodiment; and
FIG. 9 is a flowchart illustrating the details of step 806 of FIG. 8.

DESCRIPTION OF THE REFERENCE NUMERALS

100 radio base station apparatus
102 reception antenna
104 signal demultiplexing part
106 data channel decoding part
108 control channel decoding part
110 uplink scheduler
112 downlink scheduler
114 other-cell interference receiving part
116 control channel generating part
118 data channel generating part
120 signal multiplexing part
122 transmission antenna
150 core network
200 mobile station apparatus
202 reception antenna
204 signal demultiplexing part
206 data channel decoding part
208 data processing part
210 control channel decoding part
212 other-cell interference measuring part
214 CQI generating part
216 control channel generating part
218 data channel generating part
220 signal multiplexing part
222 transmission antenna

MODE FOR CARRYING OUT THE INVENTION

A description is given in detail, with reference to the drawings, of an embodiment of the present invention.

According to the embodiment, the problem of the interference with a neighbor cell in the case of applying multi-user MIMO is solved by changing the stream configuration of multi-user MIMO.

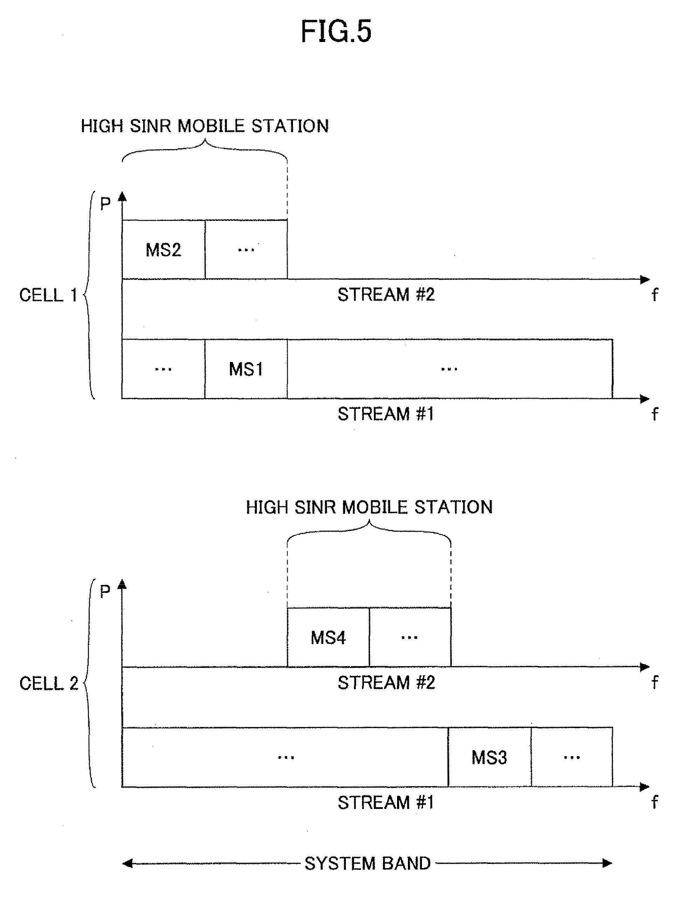

FIG. 5 is a diagram illustrating a stream configuration, that is, the relationship between a frequency band f and transmission power P, in each cell according to the embodiment. As illustrated in FIG. 5, MS1 and MS2 are in Cell 1, and MS3 and MS4 are in Cell 2, which neighbors Cell 1.

In this embodiment, as illustrated in FIG. 5, in Cell 1, MS2, which is a mobile station of low interference with other cells (for example, Cell 2) (that is, of high SINR) is assigned to Stream #2. Further, MS1, which is a mobile station of high interference with other cells (that is, of low SINR) is assigned to Stream #1. Likewise, in Cell 2, MS4, which is a mobile station of low interference with other cells (for example, Cell 1) (that is, of high SINR) is assigned to Stream #2. Further, MS3, which is a mobile station of high interference with other cells (that is, of low SINR) is assigned to Stream #1.

Thus, by assigning a mobile station of low interference with other cells only to Stream #2, it is possible to reduce an increase in interference with other cells due to application of the MIMO technology. This makes it possible to increase the throughput of a mobile station in the peripheral area of a cell.

Further, in each cell, the entire frequency band is used for Stream #1, but only part of the frequency band is used for Stream #2. Further, the frequency band used for Stream #2 is caused to differ between neighboring cells.

Thus, by reducing an increase in the amount of interference due to application of the MIMO technology by limiting the frequency band used in Stream #2, and by using different frequency bands, it is possible to disperse the effect of an increase in interference for a decrease in throughput.

In the above-described embodiment, the frequency band used in Stream #2 is caused to differ between neighboring cells. If a cell is constituted of multiple sectors, the frequency band may be caused to differ between neighboring sectors.

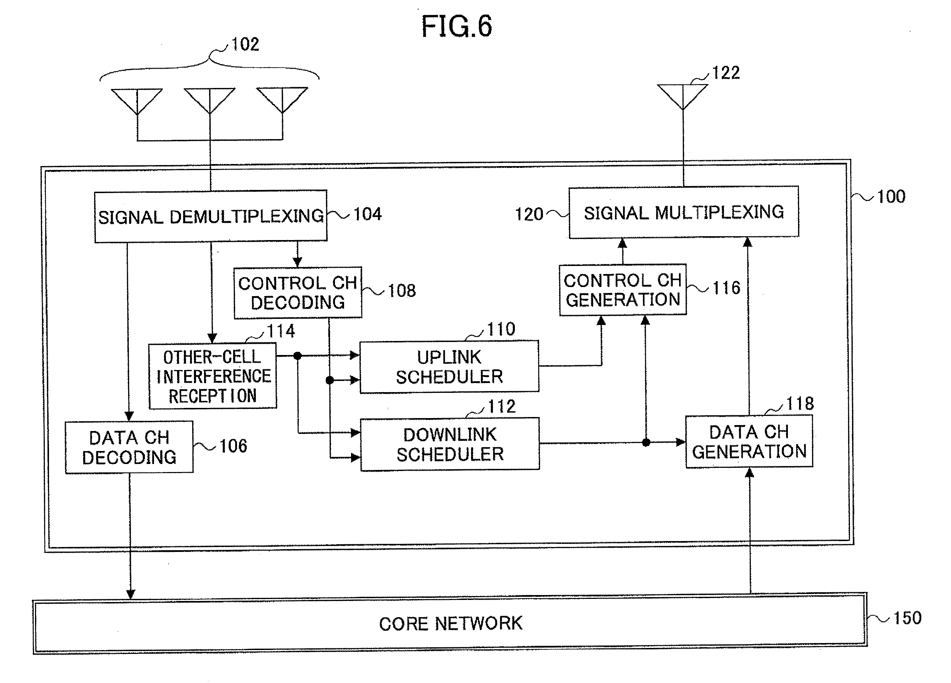

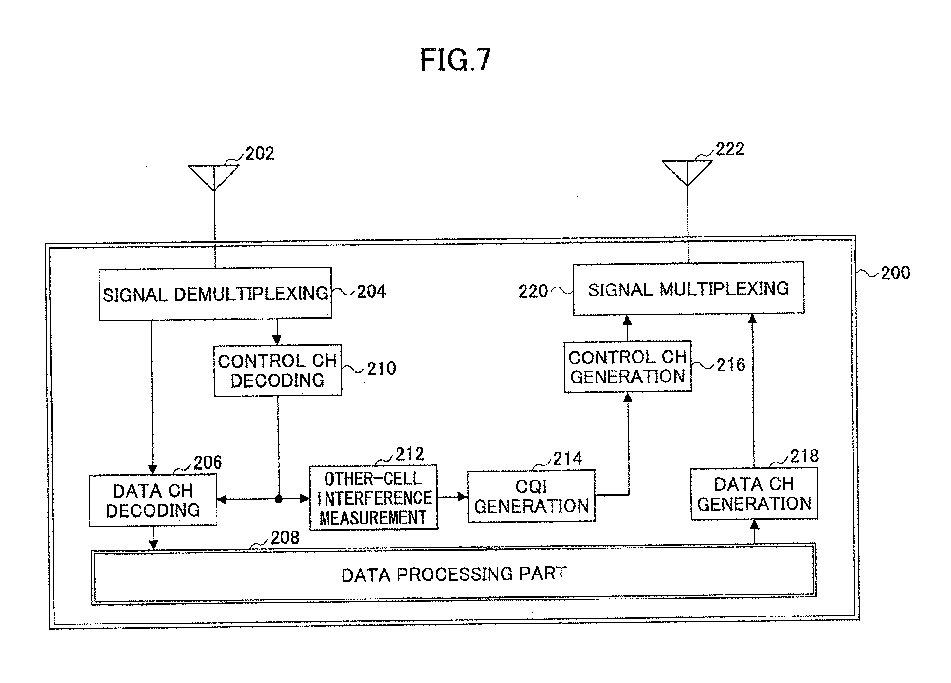

FIG. 6 is a diagram illustrating a configuration of a radio base station apparatus 100 according to the embodiment. In the radio base station apparatus 100, a signal transmitted from a mobile station (for example, a mobile station apparatus 200 illustrated in FIG. 7) is received by reception antennas 102 to be demultiplexed into a data signal, a control signal, and an other-cell interference signal. The data signal is decoded by a data channel (CH) decoding part 106 to be transmitted to a core network 150 of an upper layer. On the other hand, the control signal is decoded by a control channel (CH) decoding part 108 to be transmitted to an uplink scheduler 110 and a downlink scheduler 112 in the radio base station apparatus 100. Further, the other-cell interference signal, indicating the amount of interference with other cells measured in the mobile station is processed by an other-cell interference receiving part 114 to be transmitted to the uplink scheduler 110 and the downlink scheduler 112. The uplink scheduler 110 schedules resource allocation, transmission power, etc., on the uplink. The downlink scheduler 112 schedules resource allocation, transmission power, etc., on the downlink. A control channel (CH) generating part 116 generates a control signal based on the scheduling results. Further, on the downlink, a data channel (CH) generating part 118 generates a data signal using a signal from the core network 150 based on the scheduling results. The generated control signal and data signal are multiplexed by a signal multiplexing part 120 to be transmitted from a transmission antenna 122.

In FIG. 6, for an easier understanding of explanations, the reception antennas 102 and the transmission antenna 122 are separately illustrated. However, a reception antenna and a transmission antenna do not always have to be separated. In practice, radio base station apparatuses may use a shared antenna for transmission and reception.

FIG. 7 is a diagram illustrating a configuration of the mobile station apparatus 200 according to the embodiment. In the mobile station apparatus 200, a signal transmitted from a base station (for example, the base station apparatus 100 illustrated in FIG. 6) is received by a reception antenna 202 to be demultiplexed into a data signal and a control signal by a signal demultiplexing part 204. The data signal is application data in the mobile station apparatus 200, and is decoded by a data channel (CH) decoding part 206 to be used in a data processing part 208. The control signal is decoded by a control channel decoding part 210 to be used for data decoding by the data channel (CH) decoding part 206. Further, an other-cell interference measuring part 212 measures an SIR on the downlink from the control signal decoded by the control channel (CH) decoding part 210, and transmits the SIR to a CQI generating part 214. The CQI generating part 214 generates a CQI from the SIR measured by the other-cell interference measuring part 212. The generated CQI is converted into a control signal by a control channel (CH) generating part 216. Data from the data processing part 208 are converted into a data signal by a data channel (CH) generating part 218. The generated control signal and data signal are multiplexed by a signal multiplexing part 220 to be transmitted from a transmission antenna 222.

In FIG. 7, for an easier understanding of explanations, the reception antennas 202 and the transmission antenna 222 are separately illustrated. However, a reception antenna and a transmission antenna do not always have to be separated. In practice, radio base station apparatuses may use a shared antenna for transmission and reception.

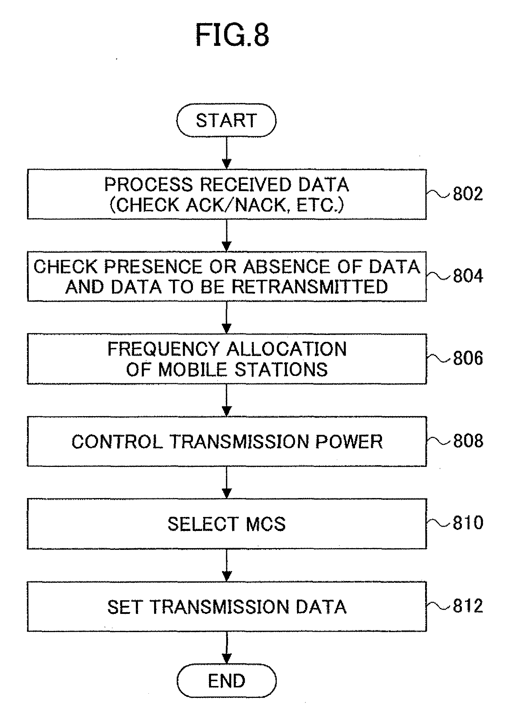

FIG. 8 is a flowchart illustrating a communication method according to the embodiment. This communication method may be performed by, for example, the uplink scheduler 110 of the radio base station apparatus 100 illustrated in FIG. 6.

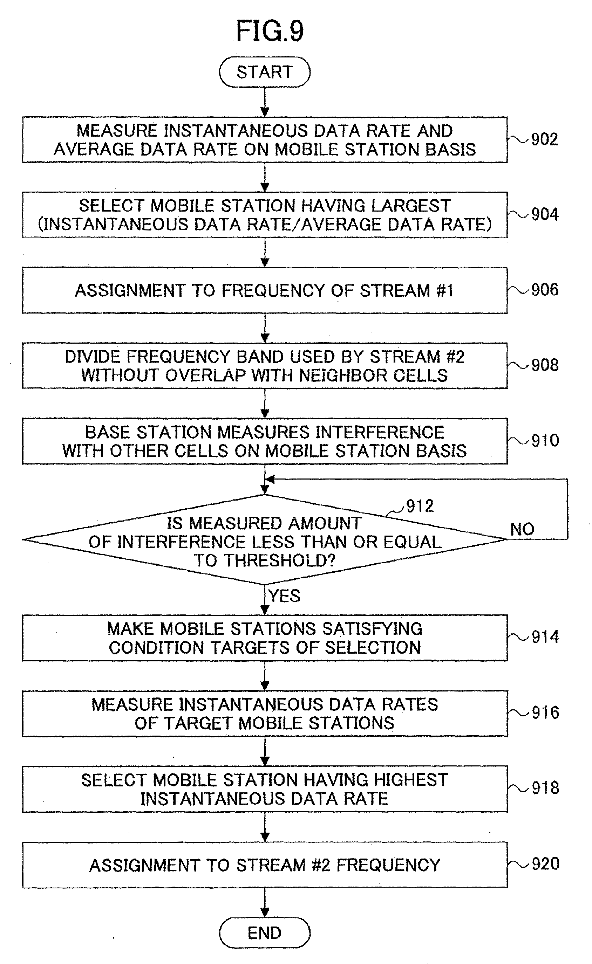

First, received data are processed, and it is determined whether to perform retransmission by checking ACK/NACK from a CRC in the signal (step 802). Next, it is determined whether there are new data by determining the presence or absence of data to be transmitted and the presence or absence of data to be retransmitted from mobile stations (step 804). Then, frequency allocation is performed for mobile stations for which new data exist (step 806). A description is given in more detail, with reference to FIG. 9, of this step. Next, transmission power and MCS (Modulation and Channel Coding Scheme) are controlled (steps 808 and 810), and transmission data are transmitted (812).

FIG. 9 is a flowchart illustrating the details of step 806 of FIG. 8.

First, assignment to Stream #1 is performed. In each frequency band, an instantaneous data rate and an average data rate are measured on a mobile station basis (step 902). Then, a mobile station having the largest instantaneous data rate/average data rate value is selected (step 904), and is assigned to a corresponding frequency band of Stream #1 (step 906). Steps 902 to 906 are repeated with respect to each sub band.

Next, assignment to Stream #2 is performed. First, a frequency band used for Stream #2 is divided without an overlap of a band to be used with neighbor cells (step 908). Next, the amount of interference with other cells of each mobile station is obtained in the base station (step 910), and it is determined whether the measured value is less than or equal to a threshold (step 912). Mobile stations whose measured values are less than the threshold are determined to be targets of selection (step 914). Here, the measured value may be the total amount of interference with mobile stations in other cells. The mobile station may calculate path loss between the mobile station and each of base stations, and inform a base station to communicate with of the value. Therefore, the measurement is performed using the value. The instantaneous data rate of each of target mobile stations is measured in each frequency band (step 916). A mobile station having the highest instantaneous data rate is selected (step 918), and is assigned to a frequency band of Stream #2 (step 920). Steps 908 through 920 are repeated with respect to each sub band.

In the above-described embodiment, the measured values are compared with a threshold, but only a mobile station having the smallest measured value may be determined to be a target of selection.

Next, a description is given of the results of a comparison of the embodiment and the conventional technique based on simulations. The simulations are performed under the conditions illustrated in Tables 1. Tables 1A and 1B illustrate simulation data.

Table 1A

| ITEM | CONTENTS |
|---|---|
| Carrier Frequency | 2.0 [GHz] |
| Bandwidth | 5 [MHz] |
| FFR size | 512 |
| Useful subcarrier | 300 |
| Sub Band | 3 |
| Frame Length | 1.0 [ms] |
| Cell | 19 |
| User | 10 [UE/Sector] |
| Sector/Cell | 3 |
| Inter-site distance | 500 [m] |
| Minimum distance between UE and cell site | 35 [m] |
| Max Tx Power | 24 [dBm] |
| Power Control | Fractional power control ($\alpha = 0.5$, Po = -40) |
| Antenna pattern and gain | $$A(\theta) = -\min\left[12\left(\frac{\theta}{\theta_{3dB}}\right)^2, A_m\right]$$ $\theta_{3dB} = 70$, $A_m = 20, 14 dBi (3 sector)$ |

Table 1B

| ITEM | CONTENTS |
|---|---|
| Distance dependent path loss | 128.1+37.6*log(R) |
| Penetration loss | 20 [dB] |
| Shadowing standard deviation | 8 [dB] |
| Shadowing correlation between cell/sectors | 0.5/1.0 |
| Antenna configuration (TxAnt, RxAnt) | MultiUser MIMO (1, 2) |
| UE antenna Gain | 0.0 [dB] |
| Noise Figure | 5 [dB] |
| Control Delay | 4TTI (4 [ms]) |
| Link Mapping | ESM |
| HARQ ON or OFF | ON |
| HARQ Maximum ReTx Number | 6 |
| HARQ ReTx Interval | 5 [frame] |
| Fading Channel | TU (fd = 5.5 [Hz]) |
| MCS Threshold | BLER = 0.1 |
| Simulation Length | 3000 [frame]*1 [Drop] |

The results of the above-described simulations are illustrated in Table 2.

Table 2

|  | Average (Mbps) | Coverage (Mbps) |
|---|---|---|
| MIMO | 7.224 | 0.090 |
| SIMO | 5.381 | 0.134 |
| Embodiment | 6.392 | 0.139 |

The simulation results illustrate the following. That is, according to conventional MIMO, while there is an increase in the average (the average throughput of all mobile stations), there is a significant decrease in the coverage (the average throughput of mobile stations near a cell boundary) compared with SIMO. On the other hand, according to the embodiment, the average increase effect due to MIMO is obtained without decreasing the coverage, and it is possible to improve the efficiency of use of frequency while controlling an increase in the amount of interference.

A detailed description is given above of the embodiment, but the present invention is not limited to the particular embodiment. Variations and modifications may be made within the gist of the present invention described in CLAIMS. Further, a description is given above of the case where the maximum number of multiplexed streams is two, but according to the present invention, the maximum number of multiplexed streams is not limited to two.

## Claims

1. A base station apparatus performing radio communications with a plurality of mobile stations using a multiple-input multiple-output (MIMO) technique, comprising:

   a scheduler configured to assign a mobile station to a first stream over a first frequency band or a second stream over a second frequency band included in the first frequency band, in accordance with a level of interference of the mobile station with a neighbor cell.

2. The base station apparatus as claimed in claim 1, wherein the second frequency band is different from a third frequency band when, in the neighbor cell, a base station apparatus performing radio communications with a plurality of mobile stations using the MIMO technique assigns a mobile station to the first stream over the first frequency band or the second stream over the third frequency band included in the first frequency band, in accordance with a level of interference of the mobile station with another neighbor cell.

3. The base station apparatus as claimed in claim 1, wherein the scheduler is configured to assign, when a cell is divided into a plurality of sectors, the mobile station to the first stream over the first frequency band or a stream over a frequency band included in the first frequency band, the frequency band differing from sector to sector, in accordance with a level of interference of the mobile station with a neighbor sector.

4. The base station apparatus as claimed in claim 1, wherein the scheduler is configured to assign the mobile station whose level of interference with the neighbor cell is less than or equal to a threshold or is smallest to the second stream over the second frequency band included in the first frequency band.

5. The base station apparatus as claimed in claim 1, wherein the level of interference is a level of total interference with mobile stations in the neighbor cell.

6. A communication method for performing radio communications between a plurality of mobile stations and a base station apparatus using a multi-input multi-output (MIMO) technique, comprising the steps of:

   measuring a level of interference with a neighbor cell in the mobile stations; and
   assigning, in the radio base station, a mobile station to a first stream over a first frequency band or a second stream over a second frequency band included in the first frequency band, in accordance with the level of interference of the mobile station with the neighbor cell.

7. The communication method as claimed in claim 6, wherein the second frequency band is different from a third frequency band when, in the neighbor cell, a base station apparatus performing radio communications with a plurality of mobile stations using the MIMO technique assigns a mobile station to the first stream over the first frequency band or the second stream over the third frequency band included in the first frequency band, in accordance with a level of interference of the mobile station with another neighbor cell.

# FIG.1

CELL 1

CELL 2

# FIG.2A

CELL 1

EP 2 509 377 A1

# FIG.2B

CELL 1

EP 2 509 377 A1

# FIG.3

CELL 1

MS1

... STREAM #2    f

MS2

... STREAM #1    f

CELL 2

... MS3 ...

STREAM #2    f

... MS4 ...

STREAM #1    f

← SYSTEM BAND →

# FIG.4

# FIG.5

HIGH SINR MOBILE STATION

CELL 1

P

MS2 | ...

STREAM #2                                                    f

... | MS1 | ...

STREAM #1                                                    f

HIGH SINR MOBILE STATION

CELL 2

P

MS4 | ...

STREAM #2                                                    f

... | MS3 | ...

STREAM #1                                                    f

← SYSTEM BAND →

14

# FIG.6

# FIG.7

SIGNAL DEMULTIPLEXING ~204

SIGNAL MULTIPLEXING ~200

CONTROL CH DECODING ~210

CONTROL CH GENERATION ~216

DATA CH DECODING ~206

OTHER-CELL INTERFERENCE MEASUREMENT ~212

CQI GENERATION ~214

DATA CH GENERATION ~218

DATA PROCESSING PART ~208

202   222   220

EP 2 509 377 A1

# FIG.8

START

PROCESS RECEIVED DATA
(CHECK ACK/NACK, ETC.) ∼802

CHECK PRESENCE OR ABSENCE OF DATA
AND DATA TO BE RETRANSMITTED ∼804

FREQUENCY ALLOCATION
OF MOBILE STATIONS ∼806

CONTROL TRANSMISSION POWER ∼808

SELECT MCS ∼810

SET TRANSMISSION DATA ∼812

END

# FIG.9

START

MEASURE INSTANTANEOUS DATA RATE AND AVERAGE DATA RATE ON MOBILE STATION BASIS ~902

SELECT MOBILE STATION HAVING LARGEST (INSTANTANEOUS DATA RATE/AVERAGE DATA RATE) ~904

ASSIGNMENT TO FREQUENCY OF STREAM #1 ~906

DIVIDE FREQUENCY BAND USED BY STREAM #2 WITHOUT OVERLAP WITH NEIGHBOR CELLS ~908

BASE STATION MEASURES INTERFERENCE WITH OTHER CELLS ON MOBILE STATION BASIS ~910

IS MEASURED AMOUNT OF INTERFERENCE LESS THAN OR EQUAL TO THRESHOLD? ~912    NO

YES

MAKE MOBILE STATIONS SATISFYING CONDITION TARGETS OF SELECTION ~914

MEASURE INSTANTANEOUS DATA RATES OF TARGET MOBILE STATIONS ~916

SELECT MOBILE STATION HAVING HIGHEST INSTANTANEOUS DATA RATE ~918

ASSIGNMENT TO STREAM #2 FREQUENCY ~920

END

<div style="text-align:center">**INTERNATIONAL SEARCH REPORT**</div>

| | International application No. |
|---|---|
| | PCT/JP2009/070193 |

**A. CLASSIFICATION OF SUBJECT MATTER**
*H04W72/04*(2009.01)i, *H04W16/28*(2009.01)i

According to International Patent Classification (IPC) or to both national classification and IPC

**B. FIELDS SEARCHED**

Minimum documentation searched (classification system followed by classification symbols)
H04W72/04, H04W16/28

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-517566 A (Qualcomm Inc.), 22 May 2008 (22.05.2008), paragraphs [0005] to [0090]; fig. 1 to 13 & US 2006/0159003 A1 & EP 1813059 A & WO 2006/045097 A2 & CA 2584997 A & KR 10-2007-0084386 A & CN 101084647 A | 1-10 |

☐ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 08 February, 2010 (08.02.10) | 16 February, 2010 (16.02.10) |

| Name and mailing address of the ISA/<br>   Japanese Patent Office | Authorized officer |
|---|---|
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007214993 A
- JP 2008061250 A